# EUROPEAN PATENT SPECIFICATION

(11) **EP 1 497 994 B1**
(45) Date of publication and mention of the grant of the patent: **02.09.2009**
(21) Application number: 03712200.9
(22) Date of filing: 14.04.2003
(51) Int. Cl.: H04W 4/06

(54) **USER TERMINAL, MEDIA SYSTEM AND METHOD OF DELIVERING OBJECTS RELATING TO BROADCAST MEDIA STREAM TO USER TERMINAL**
BENUTZERENDGERÄT, MEDIA-SYSTEM UND VERFAHREN ZUM ABLIEFERN VON OBJEKTEN IN BEZUG AUF EINEN RUNDSENDE-MEDIA-STROM ZU EINEM BENUTZERENDGERÄT
TERMINAL D'UTILISATEUR, SYSTEME MULTIMEDIA ET PROCEDE PERMETTANT DE REMETTRE DES OBJETS RELATIFS A UN FLUX MULTIMEDIA DE DIFFUSION A UN TERMINAL D'UTILISATEUR

(30) Priority: 22.04.2002 US 126623; 01.07.2002 WO PCT/IB02/02537; 16.12.2002 US 319475
(43) Date of publication of application: 19.01.2005
(73) Proprietor: Nokia Corporation, 02150 Espoo (FI)
(72) Inventor: KOPRA, Toni, FIN-01450 Vantaa (FI); MÄKIPÄÄ, Mikko, FIN-00830 Helsinki (FI); ANTTILA, Akseli, FIN-00200 Helsinki (FI)
(74) Representative: Karppinen, Olavi Arto
(86) International application number: PCT/FI2003/000290
(87) International publication number: WO 2003/090484

(56) References cited:
- EP-A1- 1 096 743
- WO-A1-01/99411
- WO-A1-99/35839
- WO-A2-02/37753

## Description

### Field

The invention relates to a method and a system of delivering objects relating to a broadcast media stream to a user terminal.

### Background

Broadcasters, such as the television and radio, have taken steps to provide the audience with supplementary digital services, such as program information, news, weather information, competitions and other related content, in addition to a traditional media stream. The supplementary digital services are usually delivered over the Internet using the personal computers of the audiences or other devices capable of connecting to the Internet.

Radio and television stations often deliver content of the content providers through their service and get revenues out of content sales. Broadcasters are already offering ringing tones and logos on their web sites, which are delivered to a user from the content provider's system. The user is required to navigate to the broadcaster's web site to access the information on what content is available and how to acquire or purchase it. The broadcasters have to promote the web address in the broadcast to attract users to visit the web site.

A method and system for delivering media services and applications over networks is described in WO-A-0 199 411.

There are, however, problems related to acquiring and delivering the objects. Often, people do not have a PC with Internet access when they are receiving the broadcast. Additionally, navigating through a complicated Internet web structure to the correct service address is laborious and time consuming. Moreover, the acquisition of a ringing tone, for example, requires the user to send a text message to a defined service number with a service code and content identification string. The service codes and identification strings are difficult to remember. The complexity in accessing the service results in a high barrier for a user to connect to a service and low ratings of the service.

EP-A-1 096 743 relates to a service based QoS Framework for GPRS/UMTS wherein for each MS/UE multimedia flows are classified and grouped into a set of QoS classes.

### Brief description of the invention

An object of the invention is to provide an improved method and system for delivering an object to a user. According to an aspect of the invention, there is provided a method of delivering an object relating to a broadcast media stream to a user terminal of a radio system. The method further comprises broadcasting the media stream by a broadcast system, associating the object to the media stream in the broadcast system, delivering an object identification of the object from the broadcast system to at least one user terminal, presenting the object identification in synchronization with the media stream in the user terminal, sending, if a user requests the delivery of the object based on the object identification, a transaction signal with the object identification from the user terminal to a database of at least one object through the radio system, and delivering the object of the object identification from the database to the user terminal, which sent the request signal, through the radio system.

According to another aspect of the invention, there is provided a media system relating to a broadcast system configured to broadcast a media stream. The media system further comprises: a radio system including at least one base station and at least one user terminal, the broadcast system having a connection to the radio system, the broadcast system being configured to associate at least one object identification to a broadcasting timeline of the broadcast media stream and the broadcast system being configured to deliver object identifications to the user terminals; the user terminal being configured to receive at least one object identification from the broadcast system and to present the at least one object identification in synchronization with the media stream, and the user terminal being configured to send, if a user requests the delivery of the object based on an object identification, a transaction signal with the object identification to a database having at least one object through the radio system, and the database being configured to deliver the object of the object identification to the user terminal, which sent the request signal, through the radio system.

According to another aspect of the invention, there is provided a user terminal of a radio system. The user terminal is configured to receive an object identification of an object from a broadcast system, the object being associated and synchronized to the broadcast media stream in the broadcast system, present the object identification in synchronization with the media stream in the user terminal, send, if a user requests the delivery of the object based on the object identification, a transaction signal with the object identification to a database of at least one object through the radio system, and receive the object of the object identification delivered from the database through the radio system.

Preferred embodiments of the invention are described in the dependent claims.

The method and system of the invention provide several advantages. The present solution provides the user with information about the object at the same moment when the user has an opportunity to request and receive the object. The ordering of an object is simple and fast, because the user needs only to activate a request of the object based on the object identification presented to the user, without needing to remember or use codes for the identification of the object.

### List of drawings

In the following, the invention will be described in greater detail with reference to the preferred embodiments and the accompanying drawings, in which
Figure 1 shows a radio system,
Figure 2 illustrates a media system,
Figure 3 shows a block diagram of a broadcast system and a server,
Figure 4 shows a block diagram of a user terminal,
Figure 5A shows signalling in the media system,
Figure 5B shows signalling in the media system,
Figure 6 shows a display of the user terminal with an object identification, and
Figure 7 represents a flow chart of the method.

### Description of embodiments

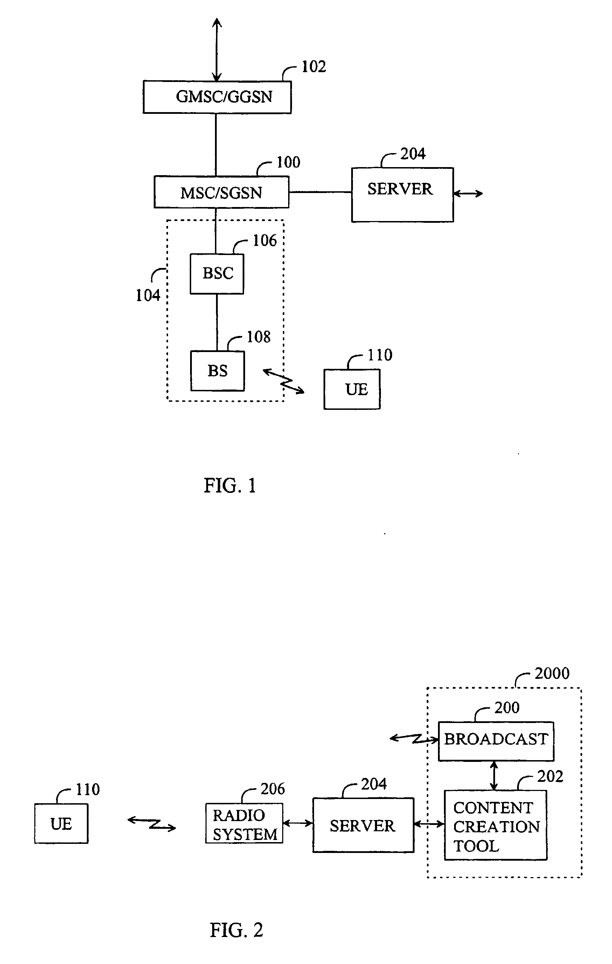

Let us first study Figure 1 that illustrates the structure of a radio system although it is assumed known per se. The radio system can be based on, for example, UMTS (Universal Mobile Telephone System) or WCDMA (Wideband Code Division Multiple Access).

The core network may, for example, correspond to the combined structure of the GSM (Global System for Mobile Communications) and GPRS systems (General Packet Radio Service). The GSM network elements are responsible for the implementation of circuit-switched connections, and the GPRS network elements for the implementation of packet-switched connections, some of the network elements being, however, shared by both systems.

A centre 100 represents a mobile services switching centre (MSC) and a serving GPRS support node (SGSN) enabling circuit-switched and packet-switched signalling, respectively, in the radio system. Because all traffic in the radio system can be controlled by the centre 100, the centre 100 can gather the accounting information of each user for use in billing.

The core network may have a gateway unit 102, which represents a gateway mobile service switching centre (GMSC) and a gateway GPRS support node (GGSN). GMSC attends to the circuit-switched connections between the core network and external networks, such as a public land mobile network (PLMN) or a public switched telephone network (PSTN), and GGSN attends to the packet-switched connections between the core network and external networks, such as the Internet.

The centre 100 controls a radio access network (RAN) 104, which may comprise at least one base station controller 106 controlling at least one base station 108. The base station controller 106 can also be called a radio network controller, and the base station can be called a node B. A user terminal 110 communicates with at least one base station 108 over a radio interface.

A server 204, which is an important part of the present solution, may be connected to the centre 100, but it may also be connected to the gateway 102 or to some part of RAN 104. In some applications, the server 206 may communicate with the radio system over the radio interface in the same manner as the user terminal 110.

The user terminal can communicate using a GPRS method in the parallel channel. Data in packets that contain address and control data in addition to the actual data are transferred in a connection set up using the GPRS method. Several connections may employ the same transmission channel simultaneously. A packet-switching method is suitable for data transmission where the data to be transmitted is generated in bursts. In such a case, it is not necessary to allocate a data link for the entire duration of transmission but only for the time it takes to transmit the packets. This reduces costs and saves capacity considerably during both the set-up and use of the network.

The present solution is generally described in Figure 2. A media system, which can be called a visual radio system in many applications, comprises the following elements: a broadcast transmitting system 200, a content creation tool 202, a server 204, a network 206 of the radio system and at least one user terminal 110. The broadcast system, which transmits broadcasts to users, can be a cable TV network, a satellite TV network, a radio frequency TV network, a radio cable or terrestrial network, and/or any TV or radio network utilising digital transmission techniques. The users of the broadcast system can be different from the users of the radio system 206. The object provider's delivery system is also included in this system and enables a delivery and a purchase of an object.

A broadcast transmitting system 200, such as a radio station, transmits a media stream. The media stream can be radio or TV programs, for example.

In addition to the broadcast channel formed by the broadcast system the present solution also provides a parallel channel, which utilizes the content creation tool 202 and the radio system in following way. Under the control of the broadcast transmitting system 200, the content creation tool 202 outputs a signal with information on a content item. The information can be an object identification relating to the media stream, data about the music played at the moment, a time table of the program, DJ's message to the listeners or the like. The signal may include any of these features alone or as a combination thereof. The object identification of a deliverable or purchasable object is selected from a list of the available objects maintained by an object provider. The object identification refers to a deliverable object, which may be purchased.

If the radio system is utilized, the signal enters a server 204, which serves as a gateway to the radio system, and the server 204 feeds the signal with the object identification relating to the media stream to the network 206 of the radio system. A base station of the network then transmits the signal to a user terminal 110 in the coverage area of the broadcast, if the use of the parallel channel has been initiated in the user terminal 110. The parameters required for delivering and purchasing are included in the object identification sent to the user terminal 110.

The object identification can also be sent to the user terminals as a broadcast utilizing RDS (Radio Data System), if the user terminals have a receiver for the RDS signal. The RDS signalling can be utilized on the FM broadcast because the RDS information is encoded in the FM signal.

The object and the object identification can comprise text, a picture, a video, an audio recording, a game, a logo, a screen saver, a ringing tone, vibration of the user terminal, light, beep, link to web/WAP, a series of these or any combination thereof.

A user actively receiving the parallel channel or a RDS signal has an opportunity to buy the object when the object identification is shown to the user by the user terminal 110. The object identification may be shown to the user for example at the moment when a song having associated with the object starts playing in the broadcast. When the user wishes to receive or buy the offered object, the user initiates a request of delivery by activating a "deliver' or "buy" button displayed on the screen of the user terminal 110. If the object identification is sent to the user through the radio system, it should be noted that there is no need for the user to be able to receive or to be aware of the broadcast, but it is enough that the user can receive the object identification through the parallel channel. Naturally in this case, the user terminal does not necessarily need a broadcast receiver.

Irrespective of whether the object identification is sent through the radio system or as a broadcast, the response to the object identification can be carried out in the same way. The activation of the "buy" or "deliver" button forms a signal requesting the purchase or delivery of the object, and the signal, including the object identification, is transmitted from the user terminal 110 to the base station of the radio system 206. The radio system 206 forwards the signal to the object provider's delivery system by using the parameters attached to the object identification. If the object provider is an operator, the object can be in an object database 208 which may be a part of the radio system 206. The object provider can also be an administrator of the server 204 which in that case may include the object database 208. Additionally, the object provider can be the broadcaster, and hence, the object database 208 can also be a part of the content creation tool 202.

The signal to request the delivery or purchase can also be handled by the broadcaster's system (content creation tool 202), and the request can be used to create and archive statistics crucial for revenue-sharing between the broadcaster and the object provider.

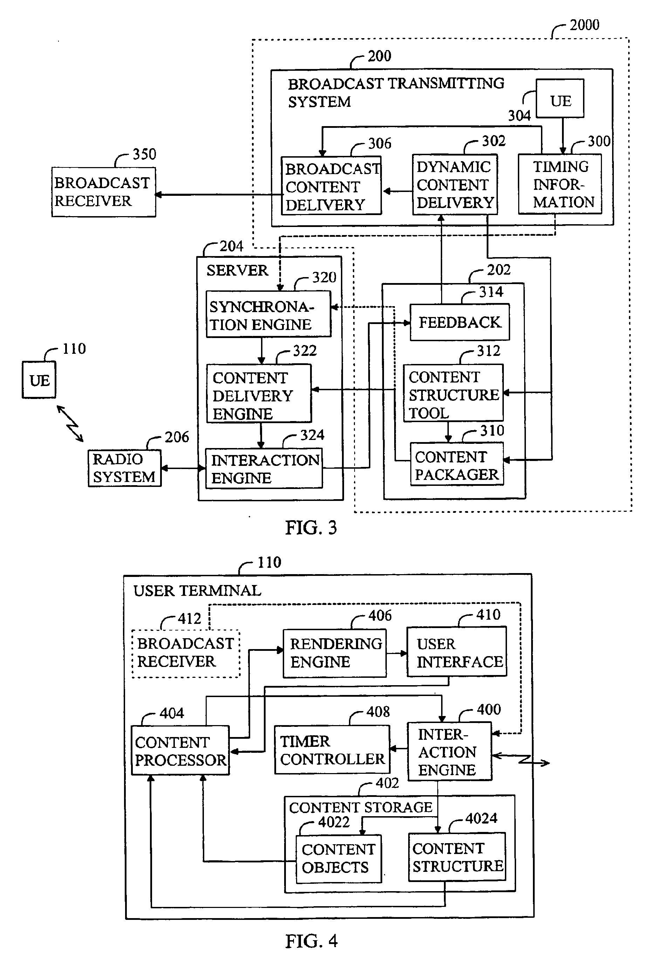

Figure 3 shows more details of the broadcast system and the server. As already described in Figure 2, along the parallel channel of the media system, there may be the following elements: a broadcast transmitting system 200, the content creation tool 202, the visual server 204, the radio system 206 and at least one user terminal 110. The broadcast transmitting system 200 of a radio station uses a sophisticated digital content management system to run a broadcast, such as an FM transmission, an AM transmission or a digital radio or television transmission.

### Broadcast system

A broadcast transmitting system 200 comprises a timing information module 300, a dynamic content delivery module 302 and a user interface 304. Timing information on the broadcast to synchronize transmissions of the broadcast channel and the parallel channel is communicated to the server 204 by the timing information module 300. The timing information module 300 provides information on the starting time and the ending time of a particular program, as well as information on the timing of advertising breaks, starting and ending of a song etc. The length of advertising and other similar breaks can be deduced for example from the show run time at the starting time of the break.

The dynamic content delivery module 302 can feed additional content information to a content structure tool 312 and a content object tool 310 in the content creation tool 202 and finally to a content delivery engine 322 in the server 204. The additional content information from the dynamic content delivery module 302 can be for example results of events in the broadcast, such as the name of a winner in a quiz show. When the additional content information is determined during the program, for example in live events, sports coverage or in broadcast radio, the additional content information is communicated to a content packaging module 310 to create content items dynamically.

In addition, the dynamic content delivery engine module 302 can receive interaction results from an interaction engine 324 in the server 204 through a feedback module 314 used as a part of the broadcast, for example, to display the results of a vote on the TV as a video overlay. The feedback module 314 processes the interaction signals from the users and creates a suitable presentation to be shown to the broadcasting personnel or to the receivers of the broadcast.

The broadcasting personnel uses a user interface 304 to control and adjust parallel channel timing of the content items with respect to the broadcast media stream. For example, the signalling in the parallel channel may be paused and resumed. These control events are communicated through a synchronization engine 320 in the server 204 to an interaction engine 400 in the user terminal 110 and the synchronization engine 320 adjust the parallel channel timing accordingly.

A broadcast content delivery module 306 transmits the broadcast to a broadcast receiver 350, such as FM radio receiver, TV set receiver, or the like. The receiver may be in the user terminal.

### Content creation tool

The content creation tool 202, which can also be called a visual radio tool in many applications, forms the presentation of the content items displayed in the user terminal. The content creation tool 202 resides in a radio or in a television station and the content creation tool 202 can be integrated with the broadcast transmitting system 200 so as to form a broadcast system 2000.

The content creation tool 202 automatically associates or the personnel uses the content creation tool to associate an object identification with the media stream in a similar manner as any content item is associated with the media stream. The content structure tool 312 attaches timing to display each object identification or another content item in a user terminal in relation to a broadcasting timeline of the media stream (for example, show the identification of this object on the screen of the user terminal at 14:43:02 after the beginning of the program) and defines the delivery of each object identification and other content items in accordance with the broadcasting timeline of the media stream.

In addition, the content creation tool 202 creates the object identification and defines user navigation structure within the parallel channel. The user navigation structure can define the deliverer and the price of the object, etc. Responses that are sent to the server 204 in response to the user interaction can be fed to the feedback module 314 in the content creation tool 202.

The content structure tool 312 defines the layouts for displaying the object identifications and other content objects, such as their size and positions on the screen of the user terminal.

The content packaging module 310 is used to create a content package of the content item to be delivered to the user terminal 110, including the content structure definition created using the content structure tool 312 as well as the content to be displayed, including text strings, graphic file objects, animations, video clips, etc. Additionally, the content packaging module 310 with the information from the timing information module 300 may define the object's availability prior, during and after broadcast of the media stream, defining an additional time period during which the media object's availability is announced but it is not available for transfer, or any combination thereof. Any desired part of a media stream may also be utilised to create of an object associated with the media stream.

Generally, the content creation tool 202 allows the radio station to create a visual, acoustic or tactual presentation and manage the content flow shown on the screen of the user terminal in synchronization with the broadcast. In addition, the content creation tool allows the station to manage interactive elements, such as delivering and purchasing objects, votings and quizzes.

### Server

The server 204 provides the users with broadcast-related content based on their current parallel channel selection. The server 204 controls the content flow to and from the user terminal. It facilitates the timed delivery of content to the user terminal as well as collecting and forwarding interaction results to the radio station. The server 204 controls the number of users. If necessary, the server 204 limits the number of users using the parallel channel at the same time. The server also takes care of content adaptation for different application platforms in various user terminals.

The synchronization engine 320 receives the starting time and advertising break information from the timing information module 300 of the broadcast transmitting system 200 or from the content creation tool 204. In addition, the synchronization engine 320 provides the means for the user terminals 110 to synchronize their clocks to the broadcast system time references by running a synchronization algorithm with the server 204.

The content delivery engine 322 delivers a signal with the content package created by the content packager 310 to the content delivery engine 322 in the server. The signal is fed from the content delivery engine 322 to the interaction engine 324 in the server 204, which sends the signal through the radio system 206 to the user terminal 110. A user terminal-specific variant of the content item can be delivered, which contains graphics objects optimised to the capabilities and the screen size of each user terminal. One content package, including object identifications or other content items, may correspond to the whole program and be delivered before the program starts. The content can alternatively be delivered in one package that contains both the user terminal software module in a suitable format, such as a Java MIDlet and the content package for a particular show. This is suitable for recorded shows and programs, where the content and content timeline are known beforehand. In this case, dynamic content can be delivered in addition to the content package to take care of variation in content during the broadcast. By delivering all or a part of the content beforehand the network traffic of the radio system 206 during the program reduces. The synchronization and the timing makes it possible to present the content timely.

Alternatively, the content can be delivered dynamically in content blocks, where a block corresponds to a segment of the program. This approach is suitable for for example FM radio, where the play list is usually decided for several songs to be played and for advertising breaks.

### Interaction engine

The interaction engine 324 can forward delivery and purchase requests from user terminals 110 to the provider's database, which actually delivers the requested object. It is also possible that the interaction engine 324 or some other part of the server 204 serves as a database, and also responds to the request and delivers the requested object. In addition, the interaction engine 324 in the server 204 collects the interaction responses from the user terminals and makes them available to the broadcast transmitting system 200 as well as to the broadcast personnel for adaptation purposes for instance. The interaction engine 324 may also create and store statistics of the number of users as well as the activity to participate in interactions.

A billing unit 330 is connected to the radio system 206 and the billing unit 330 manages billing transactions relating to the users' requests of objects and for generating invoices to the user terminal in accordance with the billing transactions. The transactions may be recorded so as to present invoices to users of the media system. Both the billing unit 330 and the interaction engine 324 may alone or together act as a transaction processing device, which records and processes the transfer of each object to the at least one user terminal.

### Mobile

Figure 4 illustrates a user terminal 110, which may comprise conventional components, including wireless modems, processors, memory, a user interface, a display, etc. In addition, the user terminal may include a broadcast receiver 412, such as a TV or radio tuner, video streaming engine, etc. The user terminal is usually a mobile or a cellular telephone.

The user terminal 110 includes a specific software module for creating the parallel channel experience. This module, which comprises the blocks 400 to 410, can be implemented using a native operating system, such as Symbian, or using a programming environment, such as Java MIDP.

A content item, such as an object identification, delivered to the user terminal 110 either from the server interaction engine 324 or as a broadcast, is stored in local memory 402. The content structure is separated from content objects and screen layouts. The content structure means a layout, a structure and a style of each slide, where the slide means one screen of information in the user terminal. The content item is an object identification (or an object). The content item can be represented as a template to which the texts and signs can be added. The content can be stored and separated in a content storage of the local memory 402 as a background process, so that the required information, such as an object identification, is always available for a content processor 404 and for a rendering engine 406 when needed. The rendering engine 406 forms the visual, acoustic and/or tactual effects of the content item for the user. Default information can also be stored in the content storage of the local memory 402 to be shown in case dynamic content cannot be delivered to the user terminal 110 in time.

The initiation of the reception of the object identifications can be made in several ways. The user can select an operation, which makes the user terminal to receive and display the object identifications coming from the broadcast system either through the radio system or as a broadcast. If the user terminal includes a receiver for the broadcast channel, the user can select a suitable broadcast channel, and the user terminal may automatically initiate the reception and the display of the object identification instead of manual initiation.

When the presentation of the object identification in the user terminal 110 is initiated, the user terminal 110 may transmit information about itself to the server 204, and the server 204 informs the user terminal of the media stream. With the information about the user terminal, a specific variant of the content items can be delivered, which contains for example graphics objects optimised to the capabilities and the screen size of each user terminal.

When the timer controller module 408 is connected to the server 204, the timer controller module 408 may run a synchronization algorithm to synchronize an internal clock of the user terminal with the time in the server. A simple synchronization algorithm can be used, based on calculating round trip delays of requests sent to the server 204 from the user terminal 110 and calculating the difference between the user terminal clock and the server clock. Once the user terminal 110 has performed synchronization and the starting time of a program is known, media stream timeline references can be translated to references in the internal clock of the user terminal 110. The content items can be shown to the user in synchronization with the broadcast.

The timer controller 408 determines whether the program has already started and what is the current timeline position. If the program is running, the timer controller 408 can automatically find a correct content item in the parallel channel to be displayed in the user interface 410.

Once the user terminal is activated and the user terminal has received a content item (object identification) to be shown at the current time, the content processor 404 starts executing. The processor 404 reads the content structure definition in the content structure memory 4024 to determine the current content to be displayed and communicates the content items and related layouts to the rendering engine 406 for display in the user interface 410. Based on the content structure definition, the content processor 404 instructs the timer controller 408 to create timer events to trigger advancement in the parallel channel according to content structure. When such a timer event takes place, the content processor 404 is again initiated to display the next content item. The processor 404 again reads structure definition in the content structure memory 4024, determines the current content items and layouts with the help of content objects memory 4022 and sends them to a user interface 410 to be displayed.

When the displayed content item, such as an object identification, contains a possibility for the user to interact by selecting an on-screen button widget or entering text to a text entry widget, a signal having information on the action is communicated from the user interface 410 to the content processor 404. The content processor 404 analyses the action and triggers a transaction as defined by the content structure of the action. The user activity triggers communication from the user terminal 110 to the server 204 automatically and the user does not need to know a long list of service numbers, service codes or identification strings. The signal of the user action is communicated from the content processor 404 to the interaction engine 400 of the user terminal, which transmits the signal through the radio system 206 to the database 208 and possibly also to the interaction engine 324 of the server 204.

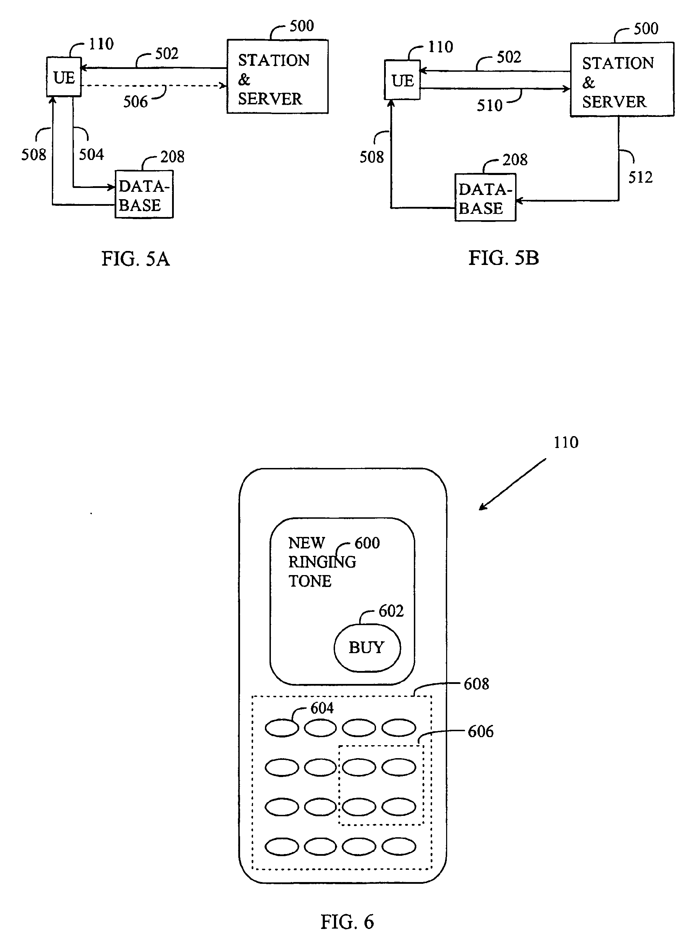

Next, the method of delivering an object to the user terminal is explained using Figures 5A and 5B. In both Figures, it is assumed that the object provider communicates a list of available objects in the database to the broadcaster, with parameters required to make a delivery and/or a purchase, including the service provider's contact number, a station-specific order code, and unique object identification for each available object.

According to Figure 5A the broadcasting section 500 (broadcasting system 200, content creation tool 204 and server 206) makes an object available for delivery and purchase by sending a signal 502 with the object identification through the parallel channel by utilizing the radio system during a suitable period of broadcast. The object identification can be broadcast to the user also as an RDS signal from the broadcast system 2000. The broadcaster uses the content creation tool to create a content package, which, in addition to the parameters for delivering and purchasing listed above, defines the type of user interaction required for the order (e.g. a button to press), text strings and images displayed to the user, and timing availability of the offering (starting time and ending time).

In addition, the server 204 selects the required layouts and versions of content objects, such as the correct-size versions of displayed images, for a particular user terminal type.

The object identification information is displayed on the screen of the user terminal 110 in synchronized fashion with the radio broadcast, based on the timing information from the broadcast system 2000. A widget allowing the user to initiate the request of delivering the object is displayed as well. The widget may be sent to the user terminals earlier than the piece of media stream begins, but the showing of the widget is synchronized to the broadcast. The widget may both be also sent and shown to the user terminals in synchronization with the broadcast. The widget may be shown to the user for example at the beginning of a piece of media stream (such as a certain song or program) with which the object is associated.

When the user wishes to buy the advertised object, he or she activates the widget, which triggers a transaction of the delivery of the object.

The specific module of creating the parallel channel experience in the user terminal 110 sends a transaction signal 504 to the database 208 of the object provider. The user terminal 110 also sends a terminal identity (such as MSISDN = Mobile Subscriber ISDN (Integrated Services Digital Network) or SIP (Session Initiation Protocol) address) with the object identification to the database 208 if not already available. The user terminal 110 may also send a signal 506 relating to the transaction signal 504 to the broadcasting section 500 (to the server 206) to make the broadcaster for instance to monitor and to keep statistics on the demand of the objects. The signal 506 is sent to the broadcasting section 500 through the radio system.

In the database 208 of the object provider, the user terminal is identified from the received signal 504, which may be an SMS (Short Message Service) message. The database sends in response to the request a signal 508 with the ordered object to the user terminal 110 by a suitable delivery channel (SMS, WAP COD (Wireless Application Protocol Content Delivery), MMS (Multimedia Messaging Service)) by utilizing the radio system.

When the user terminal 110 receives the signal 508 with the object, it notifies the user. The object can be saved in the memory of the user terminal and shown to the user.

Figure 5B shows an alternative way to order the object. Similar to Figure 5A the broadcasting section 500 makes an object available for delivery and purchase by sending a signal 502 with the object identification through the parallel channel by utilizing the radio system or through the broadcasting network as an RDS signal during a suitable period of the broadcast. And when the user wishes to buy the advertised object, he or she activates the widget which triggers the transaction of the delivery of the object.

The specific module of creating the parallel channel experience in the user terminal sends a transaction signal 510 to the broadcaster section 500 (server 204). The server may record the request, add it to the statistics and forward it to the content creation tool for monitoring purposes.

The broadcaster section 500 (content creation tool) sends a signal 512 with the request composed of a station specific order code and unique object identifier to the database 208 of the object provider as defined by the object identifier. The request can be a text string. The broadcaster section 500 may send the request through the radio system. The broadcaster section 500 also needs to send a terminal identity (such as MSISDN or SIP) to the server 204, if not already available.

The database 208 of the object provider identifies the terminal from the received signal, which may be an SMS message, and in response to the request sends a signal 508 with the ordered content to the user terminal by a suitable delivery channel (SMS, WAP COD, MMS).

When the user terminal 110 receives the signal 508 with the object, it notifies the user. The object can be saved in the memory of the user terminal.

When the object is transferred to the user terminal, it may be identified by the terminal by its format or supporting application (e.g. through MIME (Multipurpose Internet Mail Extension) type mapping). This initial identification may further reveal which type of potential use is allowed. In other words, additional rights and limitations may be attached to the object (e.g. the user's ability to forward the object to others may be limited). Hence, when a specific user purchases a certain object, which is transferred to the terminal, the object includes privileges describing rights and limitations in use or copying of the object.

Figure 6 shows a user terminal 110 whose display shows an object identification. The name 600 expresses what is available at the moment, and the widget 602 as a hotkey can be activated in several ways. The display can be sensitive to touch. Additionally or alternatively, pressing a certain key 604, some keys 606 or any key 608 of the user terminal may activate the widget to send a transaction signal requesting the delivery of the object.

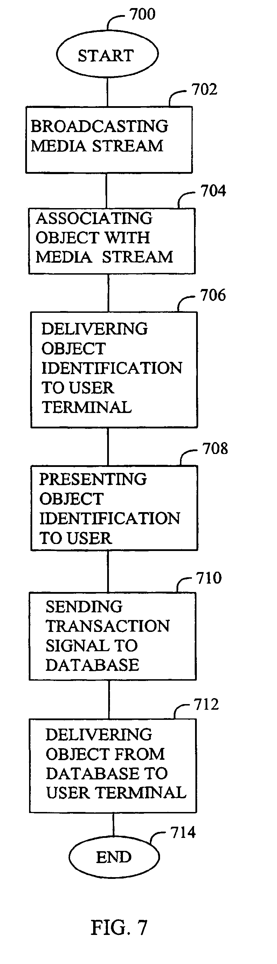

Finally, Figure 7 illustrates the main steps of the method once again. In step 700, the method begins. In step 702, the broadcast system is broadcasting the media stream. In step 704, an object is associated with the media stream in the broadcast system. In step 706, an object identification of the object is delivered from the broadcast system to at least one user terminal 110. In step 708, the user terminal presents the object identification in synchronization with the media stream. In step 710, if at least one user requests the delivery of the object based on the object identification, a transaction signal is sent with the object identification from the at least one user terminal to a database of at least one object through the network of the radio system. And in step 712, the object is delivered from the database to the at least one user terminal, which sent the request signal, through the network of the radio system. In step 714 the method ends.

The object provider is a party who has the rights for a relevant digital content, a distribution system for delivering the content to the user terminals, and the capability to bill the end user for the content. The object provider's delivery system is responsible for receiving and handling delivery requests and delivering the actual content to the user terminal. The object provider's delivery system also initiates the billing of the user. Typically, this is done using the operator's billing system, and the network operator adds the cost to the user's monthly bill. Often network operators have the dual role of delivering an object and billing the delivery of the object.

In the user terminal, the media system provides an integrated user experience, allowing the user to start both listening to a broadcast and receiving the content relating to the broadcast. The operation of the media system is based on two channels, the broadcast channel and the parallel channel. The media system also provides the visual and interactive parallel channel functionality, such as receiving and displaying content and reporting user interactions to the server.

Even though the invention is described above with reference to examples according to the accompanying drawings, it is clear that the invention is not restricted thereto but it can be modified in several ways within the scope of the appended claims.

## Claims

1. A method of delivering an object relating to a broadcast media stream to a user terminal (110) of a radio system (206), **characterized by**
broadcasting the media stream by a broadcast system (2000),
associating the object to the media stream in the broadcast system (2000),
delivering an object identification of the object from the broadcast system (2000) to at least one user terminal (110),
presenting the object identification in synchronization with the media stream in the user terminal (110),
sending, if a user requests the delivery of the object based on the object identification, a transaction signal with the object identification from the user terminal (110) to a database (208) of at least one object through the radio system (206), and
delivering the object of the object identification from the database (208) to the user terminal (110), which sent the request signal, through the radio system (206).

2. The method of claim 1, further **characterized by** providing the broadcast system (2000) with object identifications of the objects available in a database (208) of an object provider.

3. The method of claim 1, further **characterized by** creating the objects and the object identifications in the broadcast system (2000) and saving the objects in a database (208).

4. The method of claim 1, further **characterized by** delivering the object identification from the broadcast system (2000) to at least one user terminal (110) through the radio system.

5. The method of claim 1, further **characterized by** delivering the object identification from the broadcast system (2000) to at least one user terminal (110) as an RDS broadcast.

6. The method of claim 1, further **characterized by** sending the transaction signal from the user terminal directly to the database of the object provider through the radio system.

7. The method of claim 1, further **characterized by** sending first the transaction signal from the user terminal to a server (204) serving the broadcast system (2000) through the radio system, and sending a signal with the object identification from the server (204) to the database (208) of the object provider.

8. The method of claim 1, further **characterized by** associating the object identification to the media stream such that the object identification is attached to a broadcasting timeline of the media stream, and delivering the object identification in accordance with the broadcasting timeline of the media stream.

9. The method of claim 1, further **characterized by** recording and processing the transfer of each object to the user terminals by means of a transaction processing device.

10. The method of claim 1, further **characterized by** identifying the format of the object identification and the object by means of the user terminal, the identifying revealing information, such as the supporting application needed, additional rights pertaining to the object, forwarding limitations associated with the object, or any combination thereof.

11. A media system relating to a broadcast system (2000) configured to broadcast a media stream, **characterized in that** the media system further comprises:
a radio system (206) including at least one base station and at least one user terminal (110), the broadcast system (2000) having a connection to the radio system (206),
the broadcast system (2000) being configured to associate at least one object identification to a broadcasting timeline of the broadcast media stream and the broadcast system (2000) being configured to deliver object identifications to the user terminals (110);
the user terminal (110) being configured to receive at least one object identification from the broadcast system (2000) and to present the at least one object identification in synchronization with the media stream, and the user terminal (110) being configured to send, if a user requests the delivery of the object based on an object identification, a transaction signal with the object identification to a database (208) having at least one object through the radio system (206), and
the database (208) being configured to deliver the object of the object identification to the user terminal (110), which sent the request signal, through the radio system (206).

12. The system of claim 11, further **characterized in that** the database (208) of the object provider is configured to provide the broadcast system (2000) with object identifications of the objects available in the database (208).

13. The system of claim 11, further **characterized in that** the broadcast system (200) is configured to create the objects and the object identifications and save the objects in the database (208).

14. The system of claim 11, further **characterized in that** the broadcast system (2000) is configured to deliver the object identification to at least one user terminal (110) through the radio system.

15. The system of claim 11, further **characterized in that** the broadcast system (2000) is configured to deliver the object identification to at least one user terminal (110) as an RDS broadcast.

16. The system of claim 11, further **characterized in that** the user terminal (110) is configured to send the transaction signal directly to the database (208) of the object provider through the radio system.

17. The system of claim 11, further **characterized in that** the media system further comprises a server (204) serving the broadcast system (2000), and the user terminal (110) is configured to send the transaction signal to the server (204) through the radio system, the server (204) being configured to send a signal with the object identification to the database (208) of the object provider.

18. The system of claim 11, further **characterized in that** the broadcast system (2000) comprises a content creation tool (202) configured to associate the object identification to the media stream such that the object identification is attached to a broadcasting timeline of the media stream, and to deliver the object identification in accordance with the broadcasting timeline of the media stream.

19. The system of claim 11, further **characterized in that** the media system further comprises a billing unit (330) configured to record and process of the transfer of each object to the user terminals (110) for billing purposes.

20. The system of claim 11, further **characterized in that** the user terminal (110) is configured to identify the format of the object identification and the object, the identifying revealing information, such as the supporting application needed, additional rights pertaining to the object, forwarding limitations associated with the object, or any combination thereof.

21. A user terminal of a radio system, **characterized in that** the user terminal (110) is configured to
receive an object identification of an object from a broadcast system (2000), the object being associated and synchronized to the broadcast media stream in the broadcast system (2000),
present the object identification in synchronization with the media stream in the user terminal (110),
send, if a user requests the delivery of the object based on the object identification, a transaction signal with the object identification to a database (208) of at least one object through the radio system (206), and
receive the object of the object identification delivered from the database (208) through the radio system (206).

22. The user terminal of claim 21, further **characterized in that** the user terminal (110) is configured to receive the object identification from the broadcast system (2000) through the radio system.

23. The user terminal of claim 21, further **characterized in that** the user terminal (110) is configured to receive the object identification from the broadcast system (2000) as an RDS broadcast.

24. The user terminal of claim 21, further **characterized in that** the user terminal (110) is configured to send a transaction signal directly to the database of the object provider through the radio system.

25. The user terminal of claim 21, further **characterized in that** the user terminal (110) is configured to send a transaction signal from the user terminal to a server (204) serving the broadcast system (2000) through the radio system, the server then sending a signal with the object identification to the database (208) of the object provider.

## Patentansprüche

1. Verfahren zum Zustellen eines Objekts, das zu einem Broadcast-Medienstrom gehört, an ein Benutzerendgerät (110) eines Funksystems (206), **gekennzeichnet durch**
Übertragen des Medienstroms **durch** ein Broadcast-System (2000),
Zuordnen des Objekts zu dem Medienstrom in dem Broadcast-System (2000),
Zustellen einer Objektkennung des Objekts von dem Broadcast-System (2000) an zumindest ein Benutzerendgerät (110),
Darstellen der Objektkennung in Synchronisation mit dem Medienstrom in dem Benutzerendgerät (110),
wenn ein Benutzer die Zustellung des Objekts auf Grundlage der Objektkennung anfordert, Senden eines Transaktionssignals mit der Objektkennung vom Benutzerendgerät (110) an eine Datenbank (208) von zumindest einem Objekt über das Funksystem (206), und
Zustellen des Objekts der Objektkennung von der Datenbank (208) an das Benutzerendgerät (110), das das Anforderungssignal über das Funksystem (206) gesendet hat.

2. Verfahren nach Anspruch 1, ferner **gekennzeichnet durch** Versehen des Broadcast-Systems (2000) mit Objektkennungen der Objekte, die in einer Datenbank (208) eines Objektanbieters verfügbar sind.

3. Verfahren nach Anspruch 1, ferner **gekennzeichnet durch** Erstellen der Objekte und der Objektkennungen in dem Broadcast-System (2000) und Speichern der Objekte in einer Datenbank (208).

4. Verfahren nach Anspruch 1, ferner **gekennzeichnet durch** Zustellen der Objektkennung von dem Broadcast-System (2000) an zumindest ein Benutzerendgerät (110) über das Funksystem.

5. Verfahren nach Anspruch 1, ferner **gekennzeichnet durch** Zustellen der Objektkennung von dem Broadcast-System (2000) an zumindest ein Benutzerendgerät (110) als RDS-Broadcast.

6. Verfahren nach Anspruch 1, ferner **gekennzeichnet durch** Senden des Transaktionssignals von dem Benutzerendgerät direkt an die Datenbank des Objektanbieters über das Funksystem.

7. Verfahren nach Anspruch 1, ferner **gekennzeichnet durch** zunächst Senden des Transaktionssignals von dem Benutzerendgerät an den Server (204), der das Broadcast-System (2000) versorgt, über das Funksystem und Senden eines Signals mit der Objektkennung von dem Server (204) an die Datenbank (208) des Objektanbieters.

8. Verfahren nach Anspruch 1, ferner **gekennzeichnet durch** derartiges Zuordnen der Objektkennung zu dem Medienstrom, dass die Objektkennung einer Übertragungszeitachse des Medienstroms beigefügt wird, und Zustellen der Objektkennung gemäß der Übertragungszeitachse des Medienstroms.

9. Verfahren nach Anspruch 1, ferner **gekennzeichnet durch** Aufzeichnen und Verarbeiten des Transfers von jedem Objekt an die Benutzerendgeräte mithilfe einer Transaktionsverarbeitungsvorrichtung.

10. Verfahren nach Anspruch 1, ferner **gekennzeichnet durch** Identifizieren des Formats der Objektkennung und des Objekts mithilfe des Benutzerendgeräts, wobei das Identifizieren Information offenlegt, wie etwa die benötigte Unterstützungsanwendung, Zusatzrechte, die das Objekt betreffen, Weiterleitungsbeschränkungen, die dem Objekt zugeordnet sind, oder jegliche Kombination davon.

11. Mediensystem, das zu einem Broadcast-System (2000) gehört und zum Übertragen eines Medienstroms konfiguriert ist, **dadurch gekennzeichnet, dass** das Mediensystem ferner Folgendes umfasst:
ein Funksystem (206), das zumindest eine Basisstation und zumindest ein Benutzerendgerät (110) beinhaltet, wobei das Broadcast-System (2000) eine Verbindung mit dem Funksystem (206) aufweist,
wobei das Broadcast-System (2000) zum Zuordnen von zumindest einer Objektkennung zu einer Übertragungszeitachse des Broadcast-Medienstroms konfiguriert ist und das Broadcast-System (2000) zum Zustellen von Objektkennungen an die Benutzerendgeräte (110) konfiguriert ist;
wobei das Benutzerendgerät (110) zum Empfangen von zumindest einer Objektkennung von dem Broadcast-System (2000) und zum Darstellen der zumindest einer Objektkennung in Synchronisation mit dem Medienstrom konfiguriert ist, und das Benutzerendgerät (110), wenn ein Benutzer die Zustellung des Objekts auf Grundlage einer Objektkennung anfordert, zum Senden eines Transaktionssignals mit der Objektkennung an eine Datenbank (208) mit zumindest einem Objekt über das Funksystem (206) konfiguriert ist, und
die Datenbank (208) zum Zustellen des Objekts der Objektkennung an das Benutzerendgerät (110), das das Anforderungssignal über das Funksystem (206) gesendet hat, konfiguriert ist.

12. System nach Anspruch 11, ferner **dadurch gekennzeichnet, dass** die Datenbank (208) des Objektanbieters zum Versehen des Broadcast-Systems (2000) mit Objektkennungen der Objekte, die in einer Datenbank (208) eines Objektanbieters verfügbar sind, konfiguriert ist.

13. System nach Anspruch 11, ferner **dadurch gekennzeichnet, dass** das Broadcast-System (2000) zum Erstellen der Objekte und der Objektkennungen und zum Speichern der Objekte in der Datenbank (208) konfiguriert ist.

14. System nach Anspruch 11, ferner **dadurch gekennzeichnet, dass** das Broadcast-System (2000) zum Zustellen der Objektkennung an zumindest ein Benutzerendgerät (110) über das Funksystem konfiguriert ist.

15. System nach Anspruch 11, ferner **dadurch gekennzeichnet, dass** das Broadcast-System (2000) zum Zustellen der Objektkennung an zumindest ein Benutzerendgerät (110) als RDS-Broadcast konfiguriert ist.

16. System nach Anspruch 11, ferner **dadurch gekennzeichnet, dass** das Benutzerendgerät (110) zum Senden des Transaktionssignals direkt an die Datenbank (208) des Objektanbieters über das Funksystem konfiguriert ist.

17. System nach Anspruch 11, ferner **dadurch gekennzeichnet, dass** das Mediensystem ferner einen Server (204) umfasst, der das Broadcast-System (2000) versorgt, und das Benutzerendgerät (110) zum Senden des Transaktionssignals an den Server (204) über das Funksystem konfiguriert ist, wobei der Server (204) zum Senden eines Signals mit der Objektkennung an die Datenbank (208) des Objektanbieters konfiguriert ist.

18. System nach Anspruch 11, ferner **dadurch gekennzeichnet, dass** das Broadcast-System (2000) ein Inhaltserstellungswerkzeug (202) umfasst, das zum derartigen Zuordnen der Objektkennung zu dem Medienstrom, dass die Objektkennung einer Übertragungszeitachse des Medienstroms beigefügt ist, und zum Zustellen der Objektkennung gemäß der Übertragungszeitachse des Medienstroms konfiguriert ist.

19. System nach Anspruch 11, ferner **dadurch gekennzeichnet, dass** das Mediensystem ferner eine Abrechnungseinheit (330) umfasst, die zum Aufzeichnen und Verarbeiten des Transfers jeden Objekts an die Benutzerendgeräte (110) für Abrechnungszwecke konfiguriert ist.

20. System nach Anspruch 11, ferner **dadurch gekennzeichnet, dass** das Benutzerendgerät (110) zum Identifizieren des Formats der Objektkennung und des Objekts konfiguriert ist, wobei das Identifizieren Information offenlegt, wie etwa die benötigte Unterstützungsanwendung, Zusatzrechte, die das Objekt betreffen, Weiterleitungsbeschränkungen, die dem Objekt zugeordnet sind, oder jegliche Kombination davon.

21. Benutzerendgerät eines Funksystems, **dadurch gekennzeichnet, dass** das Benutzerendgerät (110) zum
Empfangen einer Objektkennung eines Objekts von dem Broadcast-System (2000), wobei das Objekt dem Broadcast-Medienstrom in dem Broadcast-System (2000) zugeordnet ist und damit synchronisiert ist,
Darstellen der Objektkennung in Synchronisation mit dem Medienstrom in dem Benutzerendgerät (110),
Senden, wenn ein Benutzer die Zustellung des Objekts auf Grundlage der Objektkennung anfordert, eines Transaktionssignals mit der Objektkennung an eine Datenbank (208) von zumindest einem Objekt über das Funksystem (206), und
Empfangen des Objekts der Objektkennung, die von der Datenbank (208) zugestellt wurde, über das Funksystem (206) konfiguriert ist.

22. Benutzerendgerät nach Anspruch 21, ferner **dadurch gekennzeichnet, dass** das Benutzerendgerät (110) zum Empfangen der Objektkennung von dem Broadcast-System (2000) über das Funksystem konfiguriert ist.

23. Benutzerendgerät nach Anspruch 21, ferner **dadurch gekennzeichnet, dass** das Benutzerendgerät (110) zum Empfangen der Objektkennung von dem Broadcast-System (2000) als RDS-Broadcast konfiguriert ist.

24. Benutzerendgerät nach Anspruch 21, ferner **dadurch gekennzeichnet, dass** das Benutzerendgerät (110) zum Senden eines Transaktionssignals direkt an die Datenbank des Objektanbieters über das Funksystem konfiguriert ist.

25. Benutzerendgerät nach Anspruch 21, ferner **dadurch gekennzeichnet, dass** das Benutzerendgerät (110) zum Senden eines Transaktionssignals von dem Benutzerendgerät an einen Server (204), der das Broadcast-System (2000) versorgt, über das Funksystem konfiguriert ist, wobei der Server dann ein Signal mit der Objektkennung an die Datenbank (208) des Objektanbieters sendet.

## Revendications

1. Procédé permettant de remettre un objet relatif à un flux multimédia de diffusion à un terminal d'utilisateur (110) d'un système radio (206), **caractérisé par** les étapes consistant à :
diffuser le flux multimédia par un système de diffusion (2000),
associer l'objet au flux multimédia dans le système de diffusion (2000),
remettre une identification d'objet de l'objet du système de diffusion (2000) à au moins un terminal d'utilisateur (110),
présenter l'identification d'objet en synchronisation avec le flux multimédia dans le terminal d'utilisateur (110),
envoyer, si un utilisateur demande la remise de l'objet sur la base de l'identification d'objet, un signal de transaction avec l'identification d'objet du terminal d'utilisateur (110) à une base de données (208) d'au moins un objet à travers le système radio (206), et
remettre l'objet de l'identification d'objet de la base de données (208) au terminal d'utilisateur (110), qui a envoyé le signal de demande, à travers le système radio (206).

2. Procédé selon la revendication 1, **caractérisé en outre par** l'étape consistant à fournir au système de diffusion (2000) des identifications d'objet des objets disponibles dans une base de données (208) d'un fournisseur d'objet.

3. Procédé selon la revendication 1, **caractérisé en outre par** les étapes consistant à créer les objets et les identifications d'objet dans le système de diffusion (2000) et enregistrer les objets dans une base de données (208).

4. Procédé selon la revendication 1, **caractérisé en outre par** l'étape consistant à remettre l'identification d'objet du système de diffusion (2000) à au moins un terminal d'utilisateur (110) à travers le système radio.

5. Procédé selon la revendication 1, **caractérisé en outre par** l'étape consistant à remettre l'identification d'objet du système de diffusion (2000) à au moins un terminal d'utilisateur (110) sous la forme d'une diffusion RDS.

6. Procédé selon la revendication 1, **caractérisé en outre par** l'étape consistant à envoyer le signal de transaction du terminal d'utilisateur directement à la base de données du fournisseur d'objet à travers le système radio.

7. Procédé selon la revendication 1, **caractérisé en outre par** les étapes consistant à envoyer en premier le signal de transaction du terminal d'utilisateur à un serveur (204) desservant le système de diffusion (2000) à travers le système radio, et envoyer un signal avec l'identification d'objet du serveur (204) à la base de données (208) du fournisseur d'objet.

8. Procédé selon la revendication 1, **caractérisé en outre par** les étapes consistant à associer l'identification d'objet au flux multimédia de sorte que l'identification d'objet est attachée à un horizon de diffusion du flux multimédia et remettre l'identification d'objet en fonction de l'horizon de diffusion du flux multimédia.

9. Procédé selon la revendication 1, **caractérisé en outre par** les étapes consistant à enregistrer et traiter le transfert de chaque objet aux terminaux d'utilisateur au moyen d'un dispositif de traitement de transaction.

10. Procédé selon la revendication 1, **caractérisé en outre par** l'étape consistant à identifier le format de l'identification d'objet et l'objet au moyen du terminal d'utilisateur, l'identification révélant des informations comme l'application de prise en charge nécessaire, des droits supplémentaires relatifs à l'objet, des limitations de transfert associées à l'objet ou une combinaison de ceux-ci.

11. Système multimédia relatif à un système de diffusion (2000) configuré pour diffuser un flux multimédia, **caractérisé en ce que** le système multimédia comprend en outre :
un système radio (206) comprenant au moins une station de base et au moins un terminal d'utilisateur (110), le système de diffusion (2000) ayant une connexion au système radio (206),
le système de diffusion (2000) étant configuré pour associer au moins une identification d'objet à un horizon de diffusion du flux multimédia de diffusion et le système de diffusion (2000) étant configuré pour remettre des identifications d'objet aux terminaux d'utilisateur (110) ;
le terminal d'utilisateur (110) étant configuré pour recevoir au moins une identification d'objet du système de diffusion (2000) et pour présenter l'au moins une identification d'objet en synchronisation avec le flux multimédia, et le terminal d'utilisateur (110) étant configuré pour envoyer, si un utilisateur demande la remise de l'objet sur la base d'une identification d'objet, un signal de transaction avec l'identification d'objet à une base de données (208) ayant au moins un objet à travers le système radio (206), et
la base de données (208) étant configurée pour remettre l'objet de l'identification d'objet au terminal d'utilisateur (110), qui a envoyé le signal de demande, à travers le système radio (206).

12. Système selon la revendication 11, **caractérisé en outre en ce que** la base de données (208) du fournisseur d'objet est configurée pour fournir au système de diffusion (2000) des identifications d'objet des objets disponibles dans la base de données (208).

13. Système selon la revendication 11, **caractérisé en outre en ce que** le système de diffusion (2000) est configuré pour créer les objets et les identifications d'objet et enregistrer les objets dans une base de données (208).

14. Système selon la revendication 11, **caractérisé en outre en ce que** le système de diffusion (2000) est configuré pour remettre l'identification d'objet à au moins un terminal d'utilisateur (110) à travers le système radio.

15. Système selon la revendication 11, **caractérisé en outre en ce que** le système de diffusion (2000) est configuré pour remettre l'identification d'objet à au moins un terminal d'utilisateur (110) sous la forme d'une diffusion RDS.

16. Système selon la revendication 11, **caractérisé en outre en ce que** le terminal d'utilisateur (110) est configuré pour envoyer le signal de transaction directement à la base de données (208) du fournisseur d'objet à travers le système radio.

17. Système selon la revendication 11, **caractérisé en ce que** le système multimédia comprend en outre un serveur (204) desservant le système de diffusion (2000), et le terminal d'utilisateur (110) est configuré pour envoyer le signal de transaction au serveur (204) à travers le système radio, le serveur (204) étant configuré pour envoyer un signal avec l'identification d'objet à la base de données (208) du fournisseur d'objet.

18. Système selon la revendication 11, **caractérisé en outre en ce que** le système de diffusion (2000) comprend un outil de création de contenu (202) configuré pour associer l'identification d'objet au flux multimédia de sorte que l'identification d'objet est attachée à un horizon de diffusion du flux multimédia et remettre l'identification d'objet en fonction de l'horizon de diffusion du flux multimédia.

19. Système selon la revendication 11, **caractérisé en outre en ce que** le système multimédia comprend en outre une unité de facturation (330) configurée pour enregistrer et traiter le transfert de chaque objet aux terminaux d'utilisateur (110) à des fins de facturation.

20. Système selon la revendication 11, **caractérisé en outre en ce que** le terminal d'utilisateur (110) est configuré pour identifier le format de l'identification d'objet et l'objet, l'identification révélant des informations comme l'application de prise en charge nécessaire, des droits supplémentaires relatifs à l'objet, des limitations de transfert associées à l'objet ou une combinaison de ceux-ci.

21. Terminal d'utilisateur d'un système radio, **caractérisé en ce que** le terminal d'utilisateur (110) est configuré pour :
recevoir une identification d'objet d'un objet d'un système de diffusion (2000), l'objet étant associé et synchronisé au flux multimédia de diffusion dans le système de diffusion (2000),
présenter l'identification d'objet en synchronisation avec le flux multimédia dans le terminal d'utilisateur (110),
envoyer, si un utilisateur demande la remise de l'objet sur la base de l'identification d'objet, un signal de transaction avec l'identification d'objet à une base de données (208) d'au moins un objet à travers le système radio (206), et
recevoir l'objet de l'identification d'objet remis de la base de données (208) à travers le système radio (206).

22. Terminal d'utilisateur selon la revendication 21, **caractérisé en outre en ce que** le terminal d'utilisateur (110) est configuré pour recevoir l'identification d'objet du système de diffusion (2000) à travers le système radio.

23. Terminal d'utilisateur selon la revendication 21, **caractérisé en outre en ce que** le terminal d'utilisateur (110) est configuré pour recevoir l'identification d'objet du système de diffusion (2000) sous la forme d'une diffusion RDS.

24. Terminal d'utilisateur selon la revendication 21, **caractérisé en outre en ce que** le terminal d'utilisateur (110) est configuré pour envoyer un signal de transaction directement à la base de données du fournisseur d'objet à travers le système radio.

25. Terminal d'utilisateur selon la revendication 21, **caractérisé en outre en ce que** le terminal d'utilisateur (110) est configuré pour envoyer un signal de transaction du terminal d'utilisateur à un serveur (204) desservant le système de diffusion (2000) à travers le système radio, le serveur envoyant ensuite un signal avec l'identification d'objet à la base de données (208) du fournisseur d'objet.
